# EUROPEAN PATENT SPECIFICATION

(11) **EP 1 358 071 B1**
(45) Date of publication and mention of the grant of the patent: **28.06.2006**
(21) Application number: 01922191.0
(22) Date of filing: 12.04.2001
(51) Int. Cl.: B32B 3/28, B29C 53/26

(54) **THE PROCESS FOR THE PRODUCTION OF A PACKING MATERIAL**
VERFAHREN ZUR HERSTELLUNG VON VERPACKUNGSMATERIAL
PROCEDE DE FABRICATION D'UNE MATIERE D'EMBALLAGE

(30) Priority: 14.04.2000 SE 0001389
(43) Date of publication of application: 05.11.2003
(73) Proprietor: WINBERG, Ragnar, S-254 58 Helsingborg (SE)
(72) Inventor: WINBERG, Ragnar, S-254 58 Helsingborg (SE)
(86) International application number: PCT/SE2001/000821
(87) International publication number: WO 2001/078982

(56) References cited:
- FR-A- 1 163 547
- FR-A- 2 081 256
- FR-A- 2 088 069
- SE-C2- 514 747
- US-A- 3 666 590
- US-A- 3 744 952
- US-A- 4 188 253
- US-A- 4 897 146

## Description

One of the packing materials since long the most common is corrugated cardboard. Of the stiff corrugated cardboard, the most common form is one consisting of a corrugated layer with a flat layer on each side of the corrugated layer. Corrugated cardboard is also made as double-wall corrugated fibre-board which consists of two corrugated layers and three flat layers. For common corrugated cardboard the material is paper. At the production the ridges of the corrugated layer are provided with glue and then glued between the flat layers. Single-wall corrugated fibre-board and double-wall corrugated fibre-board are produced in flat boards. Of the boards box-boards can then be made by punching and creasing. Corrugated cardboard is light, stiff and can be produced at low costs. For special purposes where greater durability against humidity is required, corrugated cardboard boards are made of waxed or plastic-coated paper. At long exposure in high humidity also these lose their strength.
For certain articles very clean packages are required, where for instance loose fibres from paper material cannot be accepted. It can also be required of the package that it resists water and humidity during a long time without weakening. For the above-mentioned purpose corrugated cardboard containing paper cannot be used. Packing material of plastic only can be suitable for these purposes. Such a material is made by injection-moulding. It contains two surface layers kept together by thin walls, which owing to the production have the same direction as the production direction of the material. The material is expensive, among other things owing to expensive machinery equipment and low capacity.

In the US patent 4 897 146 a plastic material of three layers is described. The intermediate layer is formed by heating and stretching to a wave form by means of fixed core bars against which the material slides. At the same time as the forming, the intermediate layer is welded to a heated lower layer in broad areas. A heated upper layer is later pressed against the warm intermediate layer. The material lines which are used are comparatively thick and stiff and the ready material is suitable to be used as ceiling or wall boards. The material is not suitable for replacing corrugated cardboard as packing material. The whole intermediate layer 106 is heated at 28a and 28b and is formed after that between a cylinder 30 which has rings 38 with which the intermediate layer is pressed against the lower path 102. For the forming there are fixed core bars 34 against which the lower path 102 and the intermediate layer 106 glide. Because of the heating of the paths 102 and 106 these core bars get a high temperature and when the upper layer 104 is pressed against the intermediate layer 106, the intermediate layer 106 gets a high temperature and in consequence no resistance against compression. It is the inserted core bars 34 that take up the pressure between the upper and lower paths.

In the US patent 4 188 253 a three-layer material is described, where the ridges of the intermediate layer are perpendicular to the production direction. The welding of the intermediate layer against the lower layer is done by bringing heat to the troughs of the intermediate layer at the same time as the welding takes place. The heat must thus penetrate the intermediate layer so that the outsides of the ridges will be welded to the lower layer. As a result of the construction of the organs (14, 42) which supply the heat, also the sides between the ridges of the intermediate layer are heated.

In the French patents 2 081 256 and 2 088 069 the whole intermediate layer seems to be heated at the welding and the cross section of the intermediate layer have no straight lateral surfaces.

For corrugated cardboard there are standard dimensions. The total dimensions of corrugated cardboard are 1.2 mm (mini), 2.4 mm (fine) and 3.6 mm (coarse). It may be convenient with the same dimensions for packing material according to the present invention.

At the production of thin corrugated plastic the core bars should have a very small cross section according to the Swedish patent application 9902826-8. Then it can hardly be prevented that the whole bars get about the same temperature. The bars will therefore heat also the intermediate layer in the area between its ridges. As a result of the pressure from the outside and the friction between the plastic material and the bars they will probably be worn down in a short time at continuous feed.

With the present invention, a packing material can be produced which in certain respects has better characteristics than what was earlier known.

The material of the packing material according to the invention is thermoplastic film of e.g. polystyrene. This is available on the market in various qualities. Another material is polyethylene with a great amount of filler of chalk which makes the plastic degradable by sunlight. Polystyrene is environment-friendly since at perfect combustion only carbon dioxide and water are formed. Used packages can be ground and become new raw material. The packing material itself contains no glue but is only put together by welding of the integral plastic films. The packing material is entirely independent of humidity and it is clean and does not contain dust and fibres. As the production outfit is relatively cheap and the production continuous and quick, the production cost can be kept low. Since the folds are parallel with the production direction advantages are reached. If at the production cutting is done to predetermined measures and the cut boards are turned 90 degrees and after that welded parallel with the folding, a new line is obtained whose breadth is independent of the breadth of the plastic film rolls. From this new line boards can be made of desired length. At this, the material spill at the stamping out of box-boards is less than if the breadth of the material is always the same as that of the material rolls. The boxes must be stamped out so that the folds become vertical on the ready boxes. The forming of the folds is carried out at the production so that the ridges become parallel with the production direction of the material. Then they can get a controlled form with sharp folds, which increases the durability of the material.

The characteristics of the invention are evident from the patent claims.

The principle of a couple of manufactures of the invention will be explained in detail in the following by means of figures. For the sake of clarity certain measures have been exaggerated. The shown procedures are only examples and the invention is only limited by the patent claims.
Figure 1 shows à first manufacture in principle.
Figure 2 shows magnified a part of the section A - A.
Figure 3 shows magnified a part of the section B -B.
Figure 4 shows magnified a part of the section C - C.
Figure 5 shows magnified a part of the section D - D.
Figure 6 shows a second manufacture in principle.
Figure 7 shows magnified a part of the section E - E.
Figure 8 shows magnified a part of the section F - F.
Figure 9 shows magnified a part of the section G - G.
Figure 10 shows magnified a part of the section H - H.
Figure 11 shows magnified a part of the section J - J.

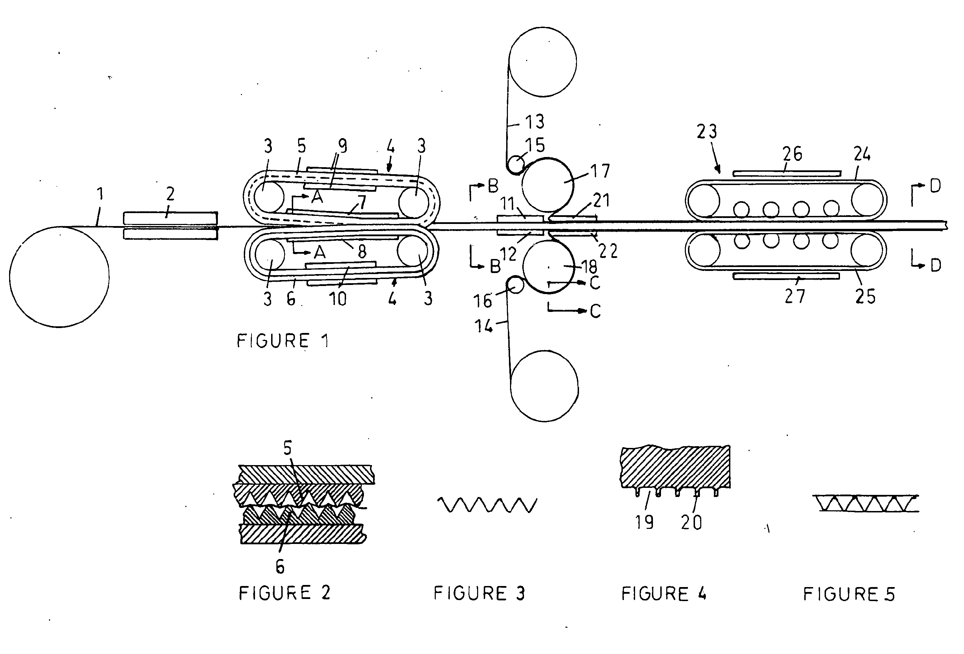

Figure 1 shows in principle a procedure for the production of a packing material with two plane outer layers kept together by a folded intermediate layer (single-wall corrugated fibre-board). 1 indicates a thermoplastic film. The film can be 0.4 millimetres thick and have the same breadth as the ready packing material is to have. 2 indicates a heater where the film is heated at the feed in a well-known manner so that it becomes easily formable by stretching. 3 indicates four rotating cylinders. On each pair of cylinders there is an endless belt of silicon 4. They have been formed so that their outsides, in the direction of travel, have protruding laths 5 and 6 whose cross sections have the form of equilateral triangles. The laths in the upper and in the lower belt are displaced sideways so that the laths 5 in the upper belt can be brought into the spaces between the laths 6 in the lower belt. Supports 7 and 8 to which the insides of the belt lie close, steer in their left parts the belts gradually nearer each other at which the laths in the upper belt more and more come into the spaces between the laths in the lower belt. The heated film is stretched gradually at the same time as its thickness is reduced. When the belts have come near each other, steered by the supports 7 and 8, which in their left parts are leaning but in their right parts are parallel, the film has been formed to its folded state and since the film then lies close to the laths which are cold, the film becomes so much cooler that it keeps its folded form after leaving the belts. The supports 7 and 8 can be cooled. Further cooling is obtained from the cooling elements 9 and 10. The folded film is transported further and comes in between two plates 11 and 12, which are hot and heat the ridges of the folded film. 13 and 14 indicate the two films for the two surface layers of the packing material. They can have approximately half the thickness of the unaffected film 1. The two films are transported over the paper guide rolls 15 and 16 to the hot rolls 17 and 18. On these there are furrows 19 in the surface, where the film does not get into contact with the roll. The film gets into contact with the narrow flanges 20 which are between the furrows. The flanges can be covered with Teflon® and keep a high temperature. The inside of the film then becomes heated along narrow parallel areas and after being bent around the plates 21 and 22 it meets the heated ridges. The plates exercise a certain pressure against each other at which the ridges are welded together with the heated areas on the insides of the films. As a result of the form of the folding and that the folded film, apart from the ridges, is cool, it can stand a considerable pressure of the plates at which the welding is facilitated. An impeller is generally indicated by 23. It has endless belts 24 and 25. There are coolers 26 and 27 to cool the belts. The ready packing material is cut off in a well-known manner to boards of a predetermined length.

Figure 2 shows magnified a part of the section A - A, where the film 1 has begun to be folded by stretching.

Figure 3 shows magnified a part of the section B - B where the film has got its finished folded form.

Figure 4 shows magnified a part of the section C - C where the flanges of roll can be clearly seen.

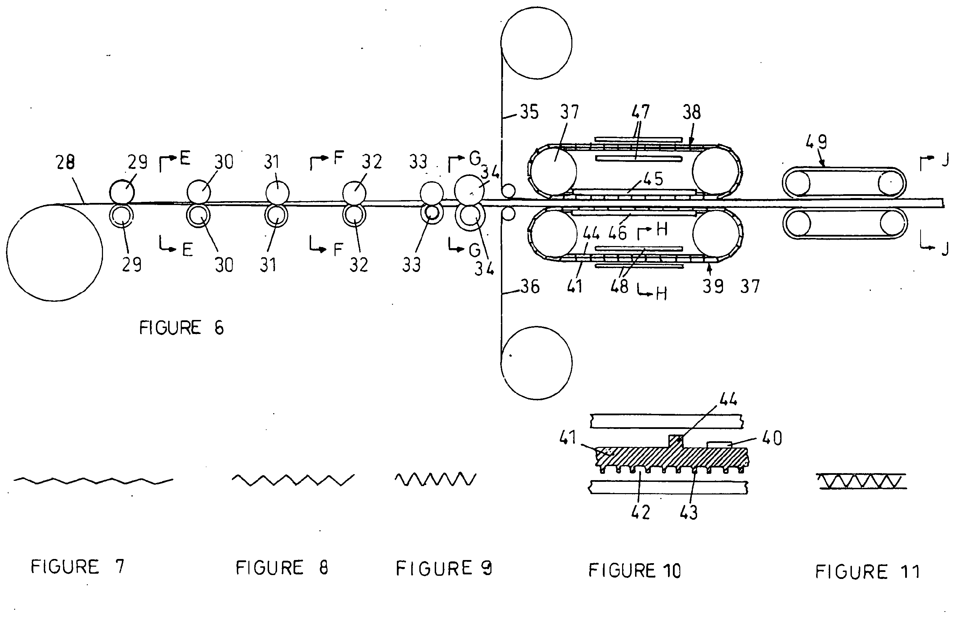

Figure 5 shows magnified a part of the section D - D where the packing material is ready.

Figure 6 shows in principle a second procedure for the production of a packing material with two plane outer layers, kept together by a folded intermediate layer. 28 indicates a film of thermoplastic. Here the film can be for instance 0.2 millimetres thick, that is about as thick as the plastic in the outer layers. The film 28 is about twice as broad as the ready packing material. The film is transported between pairs of grooved rolls 29, 30, 31, 32 and 33 which bring about the folding. As the folds become deeper the breadth of the film is reduced. If the film 28 is two metres wide several metres may be needed in the production direction before the forming of the film has been finished and its breadth been reduced to about half. 34 indicates a pair of guide-rollers which guide the folded film so that the ridges of folding become parallel with the production direction. 35 and 36 indicate films for the two covering layers. 37 indicates four rolls. Over each pair of rolls there is an endless belt 38 and 39 consisting of many aluminium rods 41 joined by means of hinges 40. The length of the rods corresponds to the breadth of the packing material. On their outsides, the rods have grooves 42 and between them ridges 43. The ridges are parallel with the production direction and the dividing distance between them is the same as the distance between the ridges of the intermediate layer. The ridges 43 are covered with Teflon®. On the insides of the rods parallel with the ridges there are steering parts 44 which come into guide rails 45 and 46. In these the rods are guided so that in the upper and the lower belts they are faintly pressed against the intermediate layer, which is transported between these, with the covering films 35 and 36. The guide rails also steer the ridges in the rods so that they come straight over the ridges of the intermediate layer. The rods of the belts are kept hot as they come in through the heating elements 47 and 48 at transportation. The welding of the plane films with the ridges of the intermediate layer is made continuously. A propulsion plant is generally indicated by 49.

Figure 7 shows magnified a part of the section E - E where the film has begun to be folded.

Figure 8 shows magnified a part of the section F - F where the film has been folded so that the folds have become deeper at the same time as the distance between the ridges of the folds have become smaller.

Figure 9 shows magnified a part of the section G - G, where the form of the film has been finished.

Figure 10 shows magnified a part of the section H - H. Here a hinge is indicated by 40. They keep the rods 41 together to endless belts. The ridges are the parts which shall transfer heat from the outside of the film so that film on the parts which are directly outside the ridges will be welded together with them. The outsides of the rods, that is those which face the film, are covered with Teflon®. The rods are provided with guiding parts 44 on their insides. Heating elements are indicated by 48.

Figure 11 shows magnified a part of the section J - J which shows the ready packing material.

Double-wall corrugated fibre-board can be produced by adding a folded intermediate layer after a line for single-wall corrugated fibre-board has been made. As this is stiff lengthwise, it must be supplied a good distance away from the position where the single-wall board is ready. The intermediate layer can, when in position, be welded with a device according to figure 6, where only the upper belt 38 is used. The ridges 43 are here to be welded to the troughs of the intermediate layer. After the welding the upper plane plastic film is brought and this can be welded together with the ridges in the upper intermediate layer with a device according to the parts 11, 13, 15, 17 and 21.

The rolls 17 and 18 can have a smooth surface and then the whole plastic films 13 and 14 become heated on their insides. Then the careful guiding of the ridges of the intermediate layer will not be necessary.

The rods 41 can have a smooth surface on their outsides at which the whole plastic films 35 and 36 become heated. Then the careful guiding of the ridges of the intermediate layer will not be necessary.

The flanges 20 on the rolls 17 and 18 just as the ridges 43 on the rods 41 can have breaks so that the welding does not take place along unbroken lines but in certain points, for instance with a millimetre weld every third millimetre.

Because the form of the folds can be made accurately and get plane surfaces between the ridges and troughs, the intermediate layer gets greater strength against being pressed together than if the folding is sinusoidal as on common corrugated cardboard.

If only the small surfaces which are to be welded are heated, the total heating becomes small. The heating also becomes less when the heating takes place directly on the surfaces which are to be welded than if the heating must penetrate the material, that is the heating takes place from the outside of the outer layers or from the inside of a fold.

Thanks to less heating the surfaces remain planer and tidier and they become better to make pictures and text on.

Thanks to less heating, the cooling becomes simpler and can be made on a shorter distance. Particularly because the material between the ridges is not heated, the cooling, is reduced since this material cannot easily be cooled.

Because the material of the intermediate layer between the ridges is not heated, it has a greater tensile strength left than if it had been heated. This is of importance for the propulsion of the welded packing material when it is to be cut to finished boards, which has to be done. Also when the surface layers are heated only on the insides and there in narrow areas, this has an effect on the tensile strength of the material immediately after the three layers have been welded together.

The plane outer layers can be made of laminate with a more fusible layer on the side which is to be welded to the ridges of the intermediate layer.

It is obvious that the material of the layers just as its dimensions can be chosen freely.

## Claims

1. Procedure for continuous production of a packing material of the kind which has two plane parallel outer layers (13, 14. 35. 36) containing thermoplastic and where these are kept together by an intermediate layer (1, 28), which has been formed by a plane film containing thermoplastic to a folded form where the folds are parallel with the production direction of the packing material and where the ridges of the folds are welded together with the outer layers **characterized by** the fact
that the intermediate layer is first formed so that its cross section gets the form of straight sides situated close to each other with an angle between the sides of 50° - 90° and with a small rounding of its ridges,
that the intermediate layer, at the welding, is heated only on the outsides of the parts which are to be welded together while the straight parts between are left cold so that they keep their stiffness against deformation and,
that the welding pressure is applied on the outsides of the outer layers so that at the same time they press the outer layers against each other at which only the material of the intermediate layer between the ridges compensates the compression.

2. Procedure according to Patent Claim 1, **characterized by** the fact that the two outer layers are only heated (20) on the sides turned towards the ridges in narrow parallel areas, which immediately after the heating are welded together with the ridges of the intermediate layer.

3. Procedure according to an earlier patent claim, **characterized by** the fact that no further heat is added after the three layers have been put together.

4. Procedure according to an earlier patent claim, **characterized by** the fact that the heating of the outer layers takes place when they, without motion, lie close to the parts (17, 18) which convey the heat.

5. Procedure according to Patent Claim 1, **characterized by** the fact that heat for the welding is brought from the outside of the two outer layers when they lie close to the ridges.

6. Procedure according to Patent Claim 5, **characterized by** the fact that the heat is brought (43) in narrow areas outside the ridges.

## Patentansprüche

1. Verfahren zur kontinuierlichen Herstellung eines Verpackungsmaterials von der Art, die aus zwei ebenen, parallelen Deckschichten (13, 14, 35, 36) bestehen, die Thermoplast beinhalten, und die zusammengehalten werden von einer Zwischenschicht (1, 28), die aus einer ebenen Folie, die Thermoplast enthält, in eine gefaltete Form umgeformt wurde, bei der die Falten parallel zur Herstellungsrichtung des Verpackungsmaterials angeordnet sind und bei der die Spitzen der Falten mit den Deckschichten verschweißt sind, **dadurch gekennzeichnet,**
**dass** die Zwischenschicht zuerst so geformt wird, dass sie im Querschnitt eine Form von aneinander anliegenden, geraden Seiten erhält,
**dass** die Zwischenschicht beim Verschweißen nur an der Außenseite der Teile erhitzt wird, die mit der Deckschicht verschweißt werden sollen, während die geraden Bereiche dazwischen kalt bleiben, so dass sie ihre Widerstandsfähigkeit gegen Deformierung behalten, und
**dass** beim Verschweißen auf die Außenseiten der Deckschichten derart Druck aufgebracht wird, dass dieser gleichzeitig die Deckschichten auf einander zu drückt, wobei nur die geraden Seiten der Zwischenschicht dem Zusammendrücken Widerstand leisten.

2. Verfahren gemäß Anspruch 1, **dadurch gekennzeichnet, dass** den beiden Deckschichten nur Wärme (20) zugeführt wird auf den zur Zwischenschicht hin gerichteten Seiten in schmalen, parallelen Bereichen, die unmittelbar nach der Erwärmung mit der Zwischenschicht verschweißt werden.

3. Verfahren gemäß vorhergehenden Ansprüchen, **dadurch gekennzeichnet, dass** keine zusätzliche Wärme zugeführt wird, nachdem die drei Schichten vereinigt wurden.

4. Verfahren gemäß vorhergehenden Ansprüchen, **dadurch gekennzeichnet, dass** die Erwärmung der Deckschichten geschieht, wenn diese bewegungslos an den Teilen (17, 18) anliegen, die die Wärme übertragen.

5. Verfahren gemäß Anspruch 1, **dadurch gekennzeichnet, dass** die Wärme zum Verschweißen von der Außenseite der beiden Deckschichten aufgebracht wird, wenn diese an den Spitzen anliegen.

6. Verfahren gemäß Anspruch 5, **dadurch gekennzeichnet, dass** Wärme zugeführt wird (43) in schmalen, parallelen Bereichen außerhalb der Spitzen.

## Revendications

1. Procédure pour la production continue d'un matériel d'emballage du genre qui a deux couches planes extérieures parallèles (13, 14, 35, 36) contenant de la thermoplastique et où celles-ci sont jointes par une couche intermédiare (1, 28), qui, d'un film plan contenant de la thermoplastique, a été formée à une forme plissée où les plis sont parallèles à la direction de fabrication du matériel d'emballage et où les arêtes des plis sont soudées aux couches extérieures, **caractérisée en ce**
**que** la couche intermédiaire d'abord est formée de telle manière qu'en coupe elle a la forme de deux côtés droits situés l'un à côté de l'autre,
**que** la couche intermédiaire, au soudage, est chauffée seulement sur le côté extérieur des parties qui vont être soudées aux couches extérieures pendant que les parties droites entre elles sont gardées froides de telle manière qu'elles gardent leur raideur contre la déformation et
**qu'** au soudage il y a de la pression sur les côtés extérieurs des couches extérieures de telle manière qu'en même temps ils pressent les couches extérieures l'une contre l'autre et seulement les côtés droits de la couche intermédiaire contrebalancent la compression.

2. Procédure selon Revendication 1, **caractérisée en ce que** les deux couches extérieures sont chauffées (20) seulement aux côtés tournés vers la couche intermédiaire sur des parties étroites parallèles, qui immédiatement après le chauffage sont soudées à la couche intermédiaire.

3. Procédure selon une des revendications ci-dessus, **caractérisée en ce qu**'aucun chauffage n'est apporté après l'assemblage des trois couches.

4. Procédure selon une des revendications ci-dessus, **caractérisée en ce que** le chauffage des couches extérieures est fait quand quand celles-ci sont placées, sans mouvement, contre les parties (17, 18) qui transmettent la chaleur.

5. Procédure selon Revendication 1, **caractérisée en ce que** la chaleur pour le soudage est apportée du côté extérieur des deux couches extérieures quand celles-ci sont placées contre les arêtes.

6. Procédure selon Revendication 5, **caractérisée en ce que** la chaleur est apportée (43) sur des parties étroites parallèles en dehors des arêtes.
